# EUROPÄISCHE PATENTANMELDUNG

(11) **EP 2 123 540 A1**
(43) Veröffentlichungstag der Anmeldung: **25.11.2009**
(21) Anmeldenummer: 08009402.2
(22) Anmeldetag: 21.05.2008
(51) Int. Cl.: B62D 5/06

(54) **Hydraulische Hilfskraftlenkung**

(71) Anmelder: Delphi Technologies, Inc., Troy, Michigan 48007 (US)
(72) Erfinder: Haupt, Jens, 61440 Oberursel (DE); Roth, Francois, 55124 Mainz (DE)
(74) Vertreter: Manitz, Gerhart

(57) **Zusammenfassung**

Hydraulische Hilfskraftlenkung für Kraftfahrzeuge, mit einer während des Betriebs von einer Antriebseinrichtung, insbesondere einem Verbrennungsmotor des Fahrzeugs oder einem Elektromotor, antreibbaren Quelle für ein Hydraulikmedium, insbesondere einer Ölpumpe, sowie einem Lenkgetriebe und einem die Quelle mit dem Lenkgetriebe verbindenden Leitungssystem für das Hydraulikmedium, wobei das Leitungssystem wenigstens zwei von dem Hydraulikmedium durchströmbare parallel geschaltete Leitungsabschnitte aufweist.

## Beschreibung

Die Erfindung betrifft eine hydraulische Hilfskraftlenkung für Kraftfahrzeuge mit einer während des Betriebs von einer Antriebseinrichtung, insbesondere einem Verbrennungsmotor des Fahrzeugs oder einem Elektromotor, antreibbaren Quelle für ein Hydraulikmedium, insbesondere einer Ölpumpe, einem Lenkgetriebe und einem die Quelle mit dem Lenkgetriebe verbindenden Leitungssystem für das Hydraulikmedium.

Bei bekannten Hilfskraftlenkungen dieser Art besteht das die Ölpumpe mit dem Lenkgetriebe verbindende Leitungssystem einfach aus einem Gummischlauch. Die Länge dieses Schlauches hängt von den jeweiligen Fahrzeuggegebenheiten und insbesondere von der konkreten Anordnung der einzelnen Komponenten z.B. im Motorraum des Fahrzeuges ab. Typische Schlauchlängen liegen beispielsweise im Bereich von 50 cm, wobei in Abhängigkeit von den jeweiligen Gegebenheiten aber auch kürzere oder längere Verbindungsschläuche zum Einsatz kommen können.

Problematisch bei derartigen Systemen ist, dass sich Drehzahlschwankungen z.B. des Verbrennungsmotors oder des Elektromotors auf die in dem Antriebsstrang des Fahrzeugs integrierte Ölpumpe dahingehend auswirken, dass die Förderleistung der Ölpumpe entsprechend zeitlich variiert, was auch als Drehschwingungen bezeichnete Schwankungen im Ölfluss von der Ölpumpe zum Lenkgetriebe bzw. im Öldruck, der in diesem Hydrauliksystem herrscht, zur Folge hat. Diese Schwankungen werden vom Fahrer am Lenkrad als Vibrationen gespürt und als störend empfunden. Diese letztlich von der Antriebseinrichtung induzierten Strömungs- bzw. Druckvariationen im Hydraulikmedium werden auch als "Ripple" bzw. "Drehzahl-Ripple" bezeichnet. Die Antriebseinrichtung wird im Folgenden auch einfach als "Motor" bezeichnet. Darunter fallen insbesondere - aber nicht ausschließlich - ein für den Fahrantrieb des Fahrzeugs vorgesehener Verbrennungsmotor oder ein die Ölpumpe antreibender Elektromotor (EHPS).

Die Problematik dieser am Lenkrad spürbaren Vibrationen nimmt derzeit an Relevanz zu, da insbesondere in Verbindung mit Dieselmotoren versucht wird, die Leerlaufdrehzahl so gering wie möglich zu halten. Die zu den störenden Lenkradvibrationen führenden Schwankungen im Ölfluss bzw. Öldruck sind umso ausgeprägter, je niedriger die Drehzahl des die Ölpumpe antreibenden Motors ist.

Grundsätzlich kann versucht werden, diesen störenden Lenkradvibrationen mit verbesserten Schnittstellen, wie z.B. der Motorlager, der Riemenscheibe etc., des Motors und/oder mit einem verbesserten Motormanagement zu begegnen. Diesen Möglichkeiten sind jedoch Grenzen gesetzt, da derartige Ansätze zum einen mit relativ hohem Aufwand verbunden sind und zum anderen bei der Herstellung von Kraftfahrzeugen einander entgegenstehende Interessen der einzelnen Systemlieferanten zu berücksichtigen sind. So hat beispielsweise der die Lenkung einschließlich der hydraulischen Hilfskraftlenkung liefernde Hersteller meist wenig Einfluss auf Maßnahmen im Bereich des Motors.

Es wurde auch bereits versucht, den Verbindungsschlauch zwischen Ölpumpe und Lenkgetriebe einfach zu verlängern, d.h. eine Schlauchlänge vorzusehen, die größer ist, als es für die Verbindung der Ölpumpe mit dem Lenkgetriebe eigentlich erforderlich ist. Mit einer derartigen zusätzlichen Schlauchlänge können die störenden Lenkradvibrationen tatsächlich in einer zufrieden stellenden Weise minimiert oder beseitigt werden.

Allerdings führt eine derartige Schlauchverlängerung zu anderen, in der Praxis nicht akzeptierbaren Nachteilen.

Aufgrund ihrer Elastizität können sich die Verbindungsschläuche ausdehnen. Die durch den Motor hervorgerufenen Öldruckschwankungen im Verbindungsschlauch führen daher zu entsprechenden Schlauchdehnungen. Da diese Schlauchdehnungen den Strömungsquerschnitt des Schlauches verändern, kommt es im Ergebnis zu zeitlichen Verzögerungen bei der Übertragung des Öldrucks von der Ölpumpe zum Lenkgetriebe. Diese Verzögerungen machen sich beim Lenken dahingehend bemerkbar, dass ein vom Fahrer getätigter Lenkradeinschlag eine spürbare Lenkmomenterhöhung zur Folge hat. Derartige Lenkmomenterhöhungen sind sowohl im Hinblick auf die Fahrsicherheit als auch auf den Fahrkomfort nicht akzeptierbar.

Des Weiteren führen größere Schlauchlängen zu Problemen beim so genannten "packaging", d.h. bei der Unterbringung des Lenksystems und insbesondere des Verbindungsschlauches im Motorraum, wo zunehmend weniger Platz zur Verfügung steht, so dass alle Systemlieferanten dazu angehalten sind, den Platzbedarf ihrer Komponenten auf ein Minimum zu beschränken. Größere Schlauchlängen sind daher in der Praxis auch aus diesem Grund letztlich nicht durchsetzbar.

Aufgabe der Erfindung ist es, hydraulische Hilfskraftlenkungen der eingangs genannten Art dahingehend zu verbessern, dass störende Lenkradvibrationen aufgrund des Einflusses der Antriebseinrichtung soweit wie möglich unterdrückt werden, wobei gleichzeitig die vorstehend genannten Nachteile vermieden werden sollen.

Die Lösung dieser Aufgabe erfolgt durch die Merkmale des Anspruchs 1.

Erfindungsgemäß ist vorgesehen, dass das die Quelle für das Hydraulikmedium mit dem Lenkgetriebe verbindende Leitungssystem wenigstens zwei von dem Hydraulikmedium durchströmbare Leitungsabschnitte aufweist.

Es hat sich überraschend gezeigt, dass eine signifikante Reduzierung der Lenkradvibrationen erreicht werden kann, wenn wenigstens zwei Leitungsabschnitte zwischen der insbesondere als Ölpumpe oder Öldruckpumpe ausgebildeten Quelle und dem Lenkgetriebe vorgesehen werden, die während des Betriebs von dem Hydraulikmedium durchströmt werden. Unter wenigstens zwei Leitungsabschnitten im Sinne der Erfindung sind selbstverständlich nicht ausschließlich zwei oder mehrere, einfach in Strömungsrichtung aufeinander folgende, "in Reihe geschaltete" Leitungsabschnitte zu verstehen, die zusammen eine einzige Verbindungsleitung zwischen Quelle und Lenkgetriebe bilden. Eine einzige Verbindungsleitung zwischen Quelle und Lenkgetriebe, wie sie bei bekannten Hilfskraftlenkungen zum Einsatz kommt, ist also nicht Gegenstand der Erfindung.

Insbesondere sind erfindungsgemäß die wenigstens zwei im Betrieb von dem Hydraulikmedium durchströmten Leitungsabschnitte parallel angeordnet. Hierbei ist "parallel" nicht oder zumindest nicht ausschließlich in einem geometrischen Sinne zu verstehen, d.h. es ist zwar möglich, aber nicht zwingend, dass die beiden Leitungsabschnitte über einen Teil ihrer Länge oder über ihre gesamte Länge einen räumlich parallelen Verlauf aufweisen. Vielmehr ist hiermit eine "Parallelschaltung" der Leitungsabschnitt im Sinne einer Parallelschaltung elektrischer Komponenten eines elektrischen Stromkreises gemeint, d.h. für das Hydraulikmedium stehen wenigstens zwei Wege zur Verfügung, über die das Hydraulikmedium von der Quelle zum Lenkgetriebe gelangen kann. Insbesondere handelt es sich bei den wenigstens zwei durchströmbaren Leitungsabschnitten also nicht um Blind- oder Totstücke, die zwar mit Hydraulikmedium gefüllt werden könnten, durch die das Hydraulikmedium aber nicht hindurchströmen kann, d.h. in denen Hydraulikmedium stehen, aber nicht fließen kann.

Simulationen und Versuche haben gezeigt, dass das Ausmaß der Lenkradvibrationsunterdrückung durch das erfindungsgemäße Leitungssystem unter anderem auch davon abhängig ist, wie das Leitungssystem konkret ausgebildet ist. Insbesondere spielen die Anzahl der Leitungsabschnitte, die Länge und der Strömungsquerschnitt der einzelnen Leitungsabschnitte sowie die Anzahl und die Anordnung eventuell vorhandener Abzweigungen bzw. Einmündungen der Leitungsabschnitte untereinander eine Rolle. Bei der Auslegung eines konkreten Leitungssystems sind die betreffenden Fahrzeuggegebenheiten zu berücksichtigen. In der Praxis wird daher das an ein jeweiliges Fahrzeug angepasste Leitungssystem häufig oder meist einen Kompromiss zwischen praktischer Realisierbarkeit einerseits und theoretisch maximal erzielbarer Lenkradvibrationsunterdrückung andererseits darstellen.

Dementsprechend sind im Rahmen der Erfindung grundsätzlich beliebige unterschiedliche Konfigurationen des Leitungssystems denkbar. Einige prinzipielle Ausgestaltungen sind in den abhängigen Ansprüchen, der Beschreibung sowie der Zeichnung angegeben.

So kann z.B. vorgesehen sein, dass jeder Leitungsabschnitt oder zumindest eine Mehrzahl von Leitungsabschnitten jeweils von der Quelle ausgeht und in das Lenkgetriebe mündet. Für die betreffenden Leitungsabschnitte ist auf diese Weise somit ein Parallelverlauf über die gesamte Strecke zwischen Quelle und Lenkgetriebe realisiert.

In einer Konfiguration mit beispielsweise zwei Leitungsabschnitten kann des Weiteren vorgesehen sein, dass ein zweiter Leitungsabschnitt von einem ersten Leitungsabschnitt abzweigt. Es ist also nicht zwingend erforderlich, dass jeder Leitungsabschnitt über die gesamte Strecke verläuft, d.h. sich von der Quelle bis zum Lenkgetriebe erstreckt. Alternativ oder zusätzlich kann vorgesehen sein, dass ein zweiter Leitungsabschnitt in einen ersten Leitungsabschnitt mündet.

Des Weiteren ist es nicht erforderlich, dass ein oder mehrere Leitungsabschnitte überhaupt mit der Quelle oder dem Lenkgetriebe unmittelbar verbunden sind. Mit anderen Worten ist es erfindungsgemäß möglich, dass zumindest ein Leitungsabschnitt sowohl von einem der anderen Leitungsabschnitte abzweigt als auch in einen der anderen Leitungsabschnitte mündet. Für den Fall beispielsweise, dass zwei Leitungsabschnitte vorgesehen sind, befinden sich die Abzweigung und die Mündung des zweiten Leitungsabschnitts an voneinander beabstandeten Stellen des ersten Leitungsabschnitts.

Generell ist es erfindungsgemäß also möglich, dass das Leitungssystem ein Netz oder Netzwerk aus einer Mehrzahl von Leitungsabschnitten umfasst, wobei eine Mehrzahl von Stellen vorhanden ist, an denen jeweils ein Leitungsabschnitt von einem der anderen Leitungsabschnitte ausgeht oder ein Leitungsabschnitt in einen der anderen Leitungsabschnitte mündet.

Erfindungsgemäß können n Leitungsabschnitte vorgesehen sein, wobei jeder Leitungsabschnitt von einem Leitungsabschnitt a der anderen Leitungsabschnitte abzweigt und in einen Leitungsabschnitt b der anderen Leitungsabschnitte mündet. Dabei kann a=b oder a≠b gelten.

Des Weiteren kann erfindungsgemäß vorgesehen sein, dass von wenigstens einem Leitungsabschnitt mehrere andere Leitungsabschnitte ausgehen. Alternativ oder zusätzlich kann vorgesehen sein, dass in wenigstens einen Leitungsabschnitt mehrere andere Leitungsabschnitte münden.

Alle Leitungsabschnitte können den gleichen Strömungsquerschnitt aufweisen. Dies ist jedoch nicht zwingend. Es ist auch möglich, dass die Leitungsabschnitte unterschiedliche Strömungsquerschnitte aufweisen.

Vorzugsweise umfasst wenigstens ein, bevorzugt jeder, Leitungsabschnitt einen flexiblen oder biegsamen Schlauch. Bevorzugt sind die Leitungsabschnitte jeweils zumindest teilweise aus einem Material, insbesondere aus Gummi hergestellt, das bei während des Betriebs auftretenden Druckschwankungen Veränderungen des Strömungsquerschnitts des Leitungsabschnitts zulässt.

In einer weiteren vorteilhaften Ausgestaltung der Erfindung kann das Leitungssystem eine Mehrzahl von in Strömungsrichtung des Hydraulikmediums hintereinander angeordneten Segmenten aufweisen, die sich insbesondere hinsichtlich ihres Geräuschdämpfungsverhaltens voneinander unterscheiden. Insbesondere kann wenigstens ein Segment von einem oder mehreren flexiblen oder biegsamen Schlauchabschnitten gebildet sein, während wenigstens ein weiteres Segment von einem oder mehreren starren oder steifen Rohrabschnitten gebildet ist. Diese Segmente sind im Sinne einer Geräuschoptimierung in Bezug aufeinander insbesondere hinsichtlich ihrer Länge und/oder ihrer Position abgestimmt. Hierdurch kann eine signifikante Verbesserung der Geräuschdämpfung erzielt werden, wenn in einer von den jeweiligen Gegebenheiten abhängigen Weise Schlauch- und Rohrsegmente hintereinander angeordnet, also gewissermaßen "in Reihe geschaltet" werden.

Gemäß einem weiteren Ausführungsbeispiel der Erfindung weist das Leitungssystem zusätzlich wenigstens eine zur Geräuschoptimierung dienende Abstimmeinrichtung auf, die innerhalb eines, insbesondere als Schlauch ausgebildeten, Abschnitts des Leitungssystems angeordnet ist. Derartige Abstimmeinrichtungen werden auch als "Tuner" bezeichnet. Diese sind innerhalb eines oder mehrerer Schlauchabschnitte des Leitungssystems angeordnet und dienen insbesondere dazu, das Verhalten des Gesamtsystems hinsichtlich der Geräuschdämpfungseigenschaften zu verfeinern.

Die Erfindung betrifft außerdem ein Kraftfahrzeug mit einer hydraulischen Hilfskraftlenkung der hier angegebenen Art.

Weiter bevorzugte Ausführungsbeispiele der Erfindung sind in den abhängigen Ansprüchen, der Beschreibung sowie der Zeichnung angegeben.

Die Erfindung wird im Folgenden beispielhaft unter Bezugnahme auf die Zeichnungen beschrieben. Es zeigen:
- Fig. 1: schematisch in einer einzigen Darstellung eine Mehrzahl von unterschiedlichen möglichen Ausführungen einer erfindungsgemäßen hydrauli-schen Hilfskraftlenkung,
- Fig. 2: ein Beispiel für ein erfindungsgemäßes hydrauli-sches Lenksystem, und
- Fig. 3: ein Diagramm mit Ergebnissen von Untersuchungen betreffend die Wirkungsweise verschiedener in einer Hilfskraftlenkung eingesetzter Leitungssysteme.

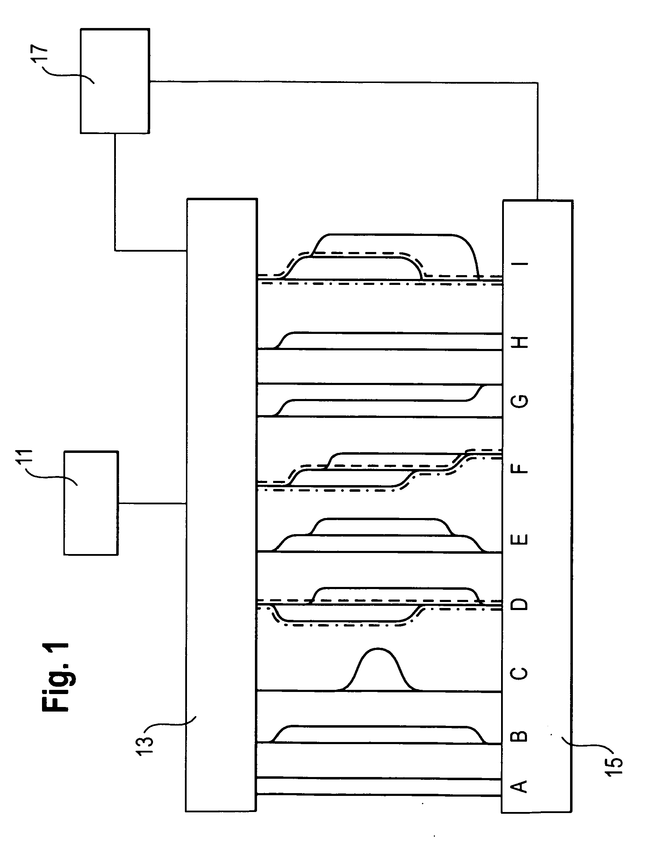

Fig. 1 zeigt rein schematisch den Aufbau einer hydraulischen Hilfskraftlenkung. Ein primär für den Fahrantrieb eines Kraftfahrzeugs vorgesehener Verbrennungsmotor 11 treibt außerdem eine als Quelle für ein Hydraulikmedium dienende Ölpumpe 13 an, d.h. die Ölpumpe 13 ist in den Antriebsstrang des Fahrzeugs integriert. Es kann sich alternativ auch um ein EHPS-System handeln, bei dem die Ölpumpe 13 von einem Elektromotor angetrieben wird. Die kritischen Frequenzen bei einem EHPS-System sind gegenüber jenen eines Systems mit Verbrennungsmotor als Antrieb für die Ölpumpe verschoben, liegen aber nach wie vor in einem Bereich, der durch die Erfindung eine signifikante Geräuschdämpfung erfahren kann.

Die Ölpumpe 13 steht über ein Leitungssystem A-I mit einem Lenkgetriebe 15 in Verbindung, wobei hier gleichzeitig verschiedene mögliche Ausgestaltungen A-I für das Leitungssystem dargestellt sind. Für das Hydrauliköl ist ferner ein Reservoir 17 vorgesehen, in das der Hydraulikölrücklauf vom Lenkgetriebe mündet.

Die prinzipielle Funktionsweise einer hydraulischen Hilfskraftlenkung ist grundsätzlich bekannt, so dass hierauf nicht näher eingegangen wird. Bei einem die Neutralstellung verlassenden Lenkradeinschlag strömt von der Quelle 13 bereitgestelltes Hydrauliköl über das Leitungssystem A-I in bestimmungsgemäßer Weise durch das Lenkgetriebe, um den Fahrer beim Lenken zu unterstützen.

Die in Fig. 1 dargestellten Leitungssysteme A-I zeigen rein beispielhaft verschiedene Möglichkeiten für eine konkrete Ausgestaltung des Leitungssystems. Selbstverständlich ist in einem konkreten Anwendungsfall zwischen der Ölpumpe 13 und dem Lenkgetriebe 15 jeweils nur ein einziges dieser Leitungssysteme A-I vorhanden.

Das Leitungssystem A umfasst zwei parallel geschaltete Leitungsabschnitte, die jeweils von der Ölpumpe 13 ausgehen und in das Lenkgetriebe 15 münden.

Im Unterschied dazu ist beim Leitungssystem B vorgesehen, dass nur ein Leitungsabschnitt von der Quelle 13 ausgeht und in das Lenkgetriebe 15 mündet. Der andere Leitungsabschnitt zweigt relativ nahe an der Ölpumpe 13 von dem ersten Leitungsabschnitt ab und mündet relativ nahe am Lenkgetriebe 15 in den ersten Leitungsabschnitt. Die Strecke, über welche zwei parallele Pfade für das Medium zur Verfügung stehen, kann grundsätzlich eine beliebige Länge aufweisen und an einer grundsätzlich beliebigen Stelle im Leistungssystem zwischen Ölpumpe 13 und Lenkgetriebe 15 angeordnet sein. Dieser von dem abzweigenden und einmündenden Leitungsabschnitt bereitgestellte zweite Strömungspfad für das Hydrauliköl ist in diesem Ausführungsbeispiel nur unwesentlich kürzer als der von dem sich über die gesamte Strecke zwischen Ölpumpe 13 und Lenkgetriebe 15 erstreckenden ersten Leitungsabschnitt bereitgestellte Strömungsweg.

Das Leitungssystem C entspricht prinzipiell dem Leitungssystem B, wobei jedoch die Stellen der Abzweigung und der Mündung des zweiten Leitungsabschnitts sich in einer geringeren Entfernung voneinander befinden. Die Länge des zweiten Leitungsabschnitts kann grundsätzlich beliebig gewählt werden und ist von der Entfernung zwischen Abzweigung und Mündung von dem bzw. in den ersten Leitungsabschnitt längs des ersten Leitungsabschnitts unabhängig. Im Leitungssystem C ist durch den Verlauf des zweiten Leitungsabschnitts angedeutet, dass dieser keinesfalls über seine gesamte Länge oder auch nur über einen Teilbereich seiner Länge in unmittelbarer Nähe zum ersten Leitungsabschnitt verlaufen muss. In Abhängigkeit von den jeweiligen Fahrzeuggegebenheiten können die beiden Leitungsabschnitte grundsätzlich beliebig im Kraftfahrzeug bzw. in dessen Motorraum verlegt werden, soweit es die Konfiguration des von den beiden Leitungsabschnitten gebildeten Leitungssystems zulässt. Insbesondere ist kein - weder abschnittsweise noch durchgehend - im geometrischen Sinne paralleler Verlauf der beiden Leitungsabschnitte erforderlich.

Das Leitungssystem D zeigt ein Beispiel mit drei Leitungsabschnitten. Von einem durchgehenden, die Ölpumpe 13 mit dem Lenkgetriebe 15 direkt verbindenden Leitungsabschnitt zweigen an in Strömungsrichtung voneinander beabstandeten Stellen zwei weitere Leitungsabschnitte ab, die wiederum an voneinander beabstandeten Stellen in den durchgehenden Leitungsabschnitt münden. Die Längen sowie die absoluten und relativen Lagen der Abzweigungs- und/oder Mündungsstellen können in einem solchen Leitungssystem grundsätzlich beliebig variiert werden.

Generell ist zu bemerken, wobei dies grundsätzlich für alle infrage kommenden Leitungssysteme gilt, dass die Bezeichnung eines der Leitungsabschnitte, beispielsweise im Leitungssystem D, als "durchgehender", die Ölquelle 13 "direkt" mit dem Lenkgetriebe 15 verbindender Leitungsabschnitt in gewisser Weise willkürlich ist. Die zeichnerische Darstellung eines derartigen Leitungssystems darf nicht darüber hinwegtäuschen, dass in der Praxis ein hinsichtlich der Abzweigungs- und Mündungsstellen gleiches Leitungssystem aufgrund der durch die Gegebenheiten bedingte Art und Weise der Verlegung im Kraftfahrzeug ein anderes Aussehen aufweisen kann. Vor diesem Hintergrund könnte - je nach Betrachtungsweise - beim Leitungssystem D sowohl der zusätzlich gestrichelt eingezeichnete Strömungsweg als auch der zusätzlich strichpunktiert eingezeichnete Strömungsweg jeweils als "durchgehender" Leitungsabschnitt im obigen Sinne bezeichnet werden.

In einer anderen Darstellung bzw. Art und Weise der Verlegung ergäbe sich dann das hinsichtlich der prinzipiellen Wahl der Abzweigungs- und Mündungsstellen gleiche Leitungssystem I, in welchem wiederum die entsprechenden Abschnitte zusätzlich gestrichelt bzw. strichpunktiert dargestellt sind.

Bei dem Leitungssystem E sind wiederum drei Leitungsabschnitte vorgesehen.

Das Leitungssystem F ist hinsichtlich der Lage der Abzweigungs- und Mündungsstellen wiederum äquivalent zu den Leitungssystemen D und I. Die entsprechenden Leitungsabschnitte sind hier wiederum gestrichelt bzw. strichpunktiert eingezeichnet.

Während bei den Leitungssystemen B-F sowie I jeweils nur ein einziger Leitungsabschnitt von der Ölpumpe 13 ausgeht und in das Lenkgetriebe 15 mündet, ist beim Leitungssystem G entsprechend dem Leitungssystem A vorgesehen, dass jeweils zwei Leitungsabschnitte von der Ölpumpe 13 ausgehen und in das Lenkgetriebe 15 münden. Zusätzlich ist hier ein diese beiden durchgehenden Leitungsabschnitte verbindender dritter Leitungsabschnitt vorgesehen, der relativ nahe an der Ölpumpe 13 von dem einen Leitungsabschnitt ausgeht und vergleichsweise nahe am Lenkgetriebe 15 in den anderen Leitungsabschnitt mündet. Die Länge dieses verbindenden Leitungsabschnitts sowie die Lage der Abzweigungs- und/oder Mündungsstelle können grundsätzlich beliebig variiert werden.

Das Leitungssystem H zeichnet sich unter anderem dadurch aus, dass die Anzahl der von der Ölpumpe 13 abgehenden Leitungsabschnitte nicht identisch ist mit der Anzahl der in das Lenkgetriebe 15 mündenden Abschnitte. Durch die Wahl entsprechender Strömungsquerschnitte der Leitungsabschnitte kann - falls ein gleicher Strömungsquerschnitte für alle Leitungsabschnitte nicht möglich ist - eine zuverlässige Funktionsweise dieses Leitungssystems H gewährleistet werden.

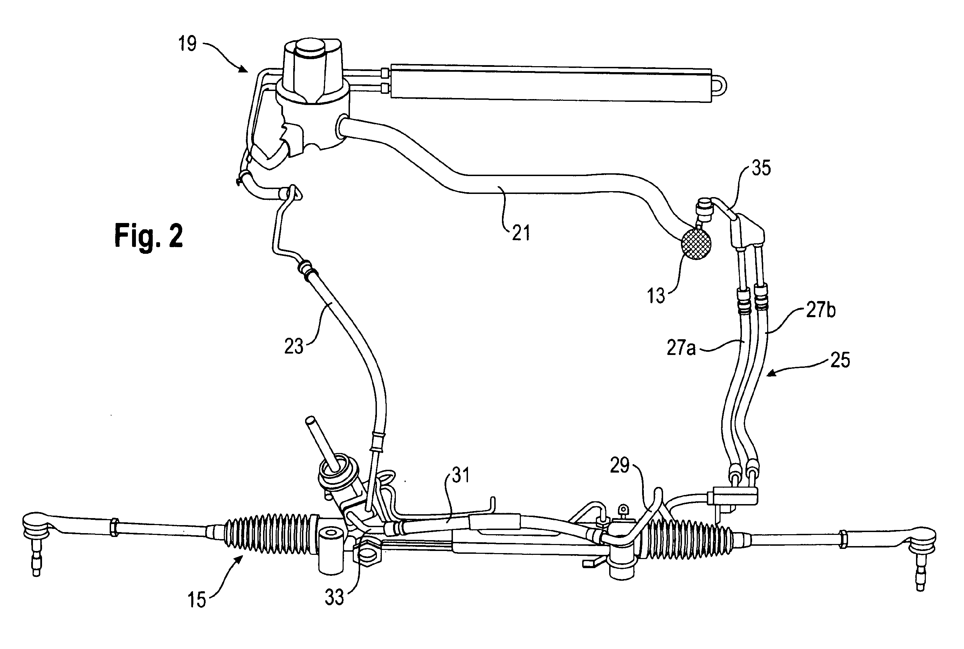

Fig. 2 zeigt die Anordnung eines Ausführungsbeispiels eines erfindungsgemäßen Leitungssystems in einem hydraulischen Lenksystem, das zusätzlich zu dem Lenkgetriebe 15 eine Ölpumpe 13, einen Ölbehälter 19, einen Saugschlauch 21 und einen Rücklaufschlauch 23 umfasst.

Das erfindungsgemäße Leitungssystem besteht aus mehreren Segmenten, und zwar einem an die Ölpumpe 13 angeschlossenen Rohrabschnitt 35, an den sich zunächst ein Druckschlauch 25 anschließt, auf den nachstehend näher eingegangen wird. Der Druckschlauch 25 geht in einen weiteren Rohrabschnitt 29 über, an den sich wiederum ein Schlauchabschnitt 31 anschließt, welcher in einen weiteren Rohrabschnitt 33 übergeht, der schließlich an das Lenkgetriebe 15 angeschlossen ist.

Während der zuletzt erwähnte Schlauchabschnitt 31 eine einzige Schlauchleitung umfasst, ist der Druckschlauch 25 in erfindungsgemäßer Weise dahingehend ausgebildet, dass zwei parallele Leitungsabschnitte 27a, 27b vorgesehen sind, die jeweils als Schlauch ausgebildet sind. Die Schläuche 27a, 27b sind jeweils über grundsätzlich beliebig ausführbare, insbesondere aus Metall bestehende Anschluss- oder Übergangsabschnitte z.B. in Form von Crimphülsen an den jeweils vorhergehenden und nachfolgenden gemeinsamen Leitungsabschnitt angeschlossen. Die beiden Leitungsabschnitte 27a, 27b sind hier insbesondere hinsichtlich Länge, Material und Strömungsquerschnitt identisch ausgebildet, wobei diesbezüglich aber auch alternative Ausgestaltungen möglich sind. Alternativ oder zusätzlich kann auch der näher am Lenkgetriebe 15 gelegene Schlauchabschnitt 31 in erfindungsgemäßer Weise zwei oder mehr parallele Leitungsabschnitte umfassen, die jeweils einen Schlauch umfassen.

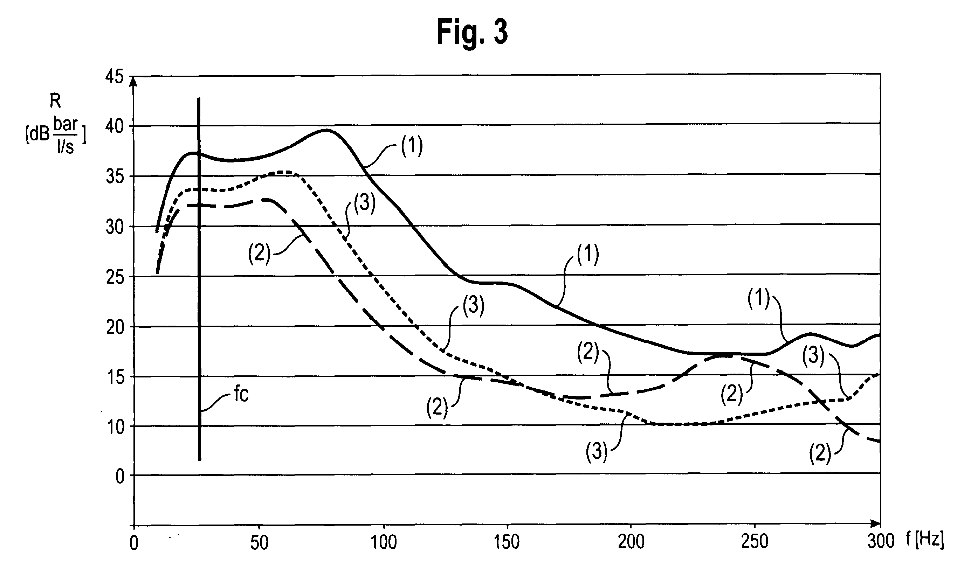

Die grafische Darstellung der Fig. 3 zeigt die Wirkungsweise unterschiedlicher Leitungssysteme. Aufgetragen ist ein Maß R für die vom Benutzer am Lenkrad spürbaren Vibrationen (Ripple) über die Frequenz dieser Lenkradvibrationen, wobei für R die Einheit dB bar/(Liter l/Sekunde s) und somit eine logarithmische Darstellung gewählt wurde.

Maßgeblich für die Akzeptanz einer hydraulischen Hilfskraftlenkung im Hinblick auf am Lenkrad spürbare Vibrationen ist das Ausmaß der Vibrationen bei einer kritischen Frequenz fc von etwa 30 Hz, die in Fig. 2 als senkrechter Balken eingezeichnet ist.

Im Rahmen des hier angestellten Vergleiches am schlechtesten schneidet ein bekanntes Leitungssystem ab, dessen Verhalten durch die durchgezogene Kurve (1) dargestellt ist und das in einer konkreten Konfiguration in einem bestimmten Kraftfahrzeug eingesetzt wird. Bei dem Verbrennungsmotor des Fahrzeugs handelt es sich um einen Dieselmotor.

Die gestrichelte Kurve (2) repräsentiert eine theoretische Auslegung eines erfindungsgemäßen Leitungssystems mit wenigstens zwei durchströmbaren Leitungsabschnitten, wobei die Längen der beiden Leitungsabschnitte so gewählt wurden, um im Rahmen einer Simulation zu untersuchen, auf welches Maß sich die Vibrationen drücken ließen, ohne die Fahrdynamik zu beeinflussen.

Die gepunktete Kurve (3) hingegen stellt ein konkretes, in der Praxis realisierbares erfindungsgemäßes Leitungssystem dar, das an die Gegebenheiten eines konkreten Fahrzeugs angepasst ist und insbesondere problemlos in diesem Fahrzeug verlegt werden kann, es also kein "Packaging"-Problem gibt. Fig. 2 zeigt, dass selbst mit einem - im Vergleich zur "optimalen" gestrichelten Kurve (2) gesehen so zu bezeichnenden - "Kompromiss" eine signifikante Verbesserungen gegenüber dem Stand der Technik gemäß der durchgezogenen Kurve (1) erzielt werden kann, wobei diese Verbesserung praktisch über den gesamten relevanten Frequenzbereich gegeben ist. Dies hat den weiteren Vorteil, dass sich die Erfindung auch in einem weiteren kritischen Frequenzbereich um etwa 90 Hz als vorteilhaft erweist. Diese vom Fahrer hörbaren und deshalb ebenfalls als nicht akzeptierbar betrachteten Vibrationen sind auf eine Instabilität des gesamten hydraulischen Systems zurückzuführen. Schließlich ist zu erwähnen, dass in vorteilhafter Weise auch Pumpengeräusche im Bereich von 100 bis 300 Hz durch die Erfindung gedämpft werden können.

### Bezugszeichenliste

- 11: Antriebseinrichtung
- 13: Quelle, Ölpumpe
- 15: Lenkgetriebe
- 17: Reservoir
- 19: Ölbehälter
- 21: Saugschlauch
- 23: Rücklaufschlauch
- 25: Druckschlauch
- 27a: Leitungsabschnitt
- 27b: Leitungsabschnitt
- 29: Rohrabschnitt
- 31: Schlauchabschnitt
- 33: Rohrabschnitt
- 35: Rohrabschnitt

- A-I: erfindungsgemäße Leitungssysteme
- fc: kritische Frequenz spürbarer Lenkradvibrationen
- R: Maß für "Ripple"

## Patentansprüche

1. Hydraulische Hilfskraftlenkung für Kraftfahrzeuge,
mit einer während des Betriebs von einer Antriebseinrichtung (11), insbesondere einem Verbrennungsmotor des Fahrzeugs oder einem Elektromotor, antreibbaren Quelle (13) für ein Hydraulikmedium, insbesondere einer Ölpumpe, einem Lenkgetriebe (15) und einem die Quelle (13) mit dem Lenkgetriebe (15) verbindenden Leitungssystem (A-I) für das Hydraulikmedium,
wobei das Leitungssystem (A-I) wenigstens zwei von dem Hydraulikmedium durchströmbare Leitungsabschnitte aufweist.

2. Hydraulische Hilfskraftlenkung nach Anspruch 1,
**dadurch gekennzeichnet,**
**dass** die Leitungsabschnitte parallel geschaltet sind.

3. Hydraulische Hilfskraftlenkung nach Anspruch 1 oder 2,
**dadurch gekennzeichnet,**
**dass** die Leitungsabschnitte jeweils von der Quelle (13) ausgehen und in das Lenkgetriebe (15) münden.

4. Hydraulische Hilfskraftlenkung nach einem der vorhergehenden Ansprüche,
**dadurch gekennzeichnet,**
**dass** ein zweiter Leitungsabschnitt von einem ersten Leitungsabschnitt abzweigt, und/oder dass ein zweiter Leitungsabschnitt in einen ersten Leitungsabschnitt mündet.

5. Hydraulische Hilfskraftlenkung nach Anspruch 4,
**dadurch gekennzeichnet,**
**dass** sich eine Abzweigung des zweiten Leitungsabschnitts von dem ersten Leitungsabschnitt einerseits und eine Mündung des zweiten Leitungsabschnitts in den ersten Leitungsabschnitt andererseits an voneinander beabstandeten Stellen des ersten Leitungsabschnitts befinden.

6. Hydraulische Hilfskraftlenkung nach einem der vorhergehenden Ansprüche,
**dadurch gekennzeichnet,**
**dass** das Leitungssystem (A-I) ein Netz oder Netzwerk aus einer Mehrzahl von Leitungsabschnitten umfasst, wobei eine Mehrzahl von Stellen vorhanden ist, an denen jeweils ein Leitungsabschnitt von einem der anderen Leitungsabschnitte ausgeht oder ein Leitungsabschnitt in einen der anderen Leitungsabschnitte mündet.

7. Hydraulische Hilfskraftlenkung nach einem der vorhergehenden Ansprüche,
**dadurch gekennzeichnet,**
**dass** n Leitungsabschnitte vorgesehen sind, wobei jeder Leitungsabschnitt von einem Leitungsabschnitt a der anderen Leitungsabschnitte abzweigt und in einen Leitungsabschnitt b der anderen Leitungsabschnitte mündet, wobei a=b oder a≠b gilt.

8. Hydraulische Hilfskraftlenkung nach einem der vorhergehenden Ansprüche,
**dadurch gekennzeichnet,**
**dass** von wenigstens einem Leitungsabschnitt mehrere andere Leitungsabschnitte ausgehen und/oder in wenigstens einen Leitungsabschnitt mehrere andere Leitungsabschnitte münden.

9. Hydraulische Hilfskraftlenkung nach einem der vorhergehenden Ansprüche,
**dadurch gekennzeichnet,**
**dass** zumindest ein Leitungsabschnitte von der Quelle (13) ausgeht und in einen der anderen Leitungsabschnitte mündet oder von einem der anderen Leitungsabschnitte ausgeht und in das Lenkgetriebe (15) mündet.

10. Hydraulische Hilfskraftlenkung nach einem der vorhergehenden Ansprüche,
**dadurch gekennzeichnet,**
**dass** das Leitungssystem (A-I) mit mehr als einem Leitungsabschnitt von der Quelle (13) ausgeht und/oder mit mehr als einem Leitungsabschnitt in das Lenkgetriebe (15) mündet.

11. Hydraulische Hilfskraftlenkung nach einem der vorhergehenden Ansprüche,
**dadurch gekennzeichnet,**
**dass** die Leitungsabschnitte unterschiedliche Strömungsquerschnitte aufweisen.

12. Hydraulische Hilfskraftlenkung nach einem der vorhergehenden Ansprüche,
**dadurch gekennzeichnet,**
**dass** die Leitungsabschnitte jeweils einen flexiblen oder biegsamen Schlauch umfassen, und/ oder dass die Leitungsabschnitte jeweils zumindest teilweise aus einem Material, insbesondere Gummi, hergestellt sind, das bei während des Betriebs auftretenden Druckschwankungen Veränderungen des Strömungsquerschnitts des Leitungsabschnitts zulässt.

13. Hydraulische Hilfskraftlenkung nach einem der vorhergehenden Ansprüche,
**dadurch gekennzeichnet,**
**dass** das Leitungssystem (A-I) eine Mehrzahl von in Strömungsrichtung des Hydraulikmediums hintereinander angeordneten Segmenten aufweist, wobei wenigsten ein Segment von einem oder mehreren flexiblen oder biegsamen Schlauchabschnitten und wenigstens ein weiteres Segment von einem oder mehreren starren oder steifen Rohrabschnitten gebildet ist, und wobei die Segmente im Sinne einer Geräuschoptimierung in Bezug aufeinander insbesondere hinsichtlich ihrer Länge und/oder ihrer Position abgestimmt sind.

14. Hydraulische Hilfskraftlenkung nach einem der vorhergehenden Ansprüche,
**dadurch gekennzeichnet,**
**dass** das Leitungssystem (A-I) zusätzlich wenigstens eine zur Geräuschoptimierung dienende Abstimmeinrichtung aufweist, die innerhalb eines, insbesondere als Schlauch ausgebildeten, Abschnitts des Leitungssystems (A-I) angeordnet ist.

15. Kraftfahrzeug mit einer hydraulischen Hilfskraftlenkung nach einem der vorhergehenden Ansprüche.
